# EUROPEAN PATENT SPECIFICATION

(11) **EP 3 658 811 B1**
(45) Date of publication and mention of the grant of the patent: **22.09.2021**
(21) Application number: 18768971.6
(22) Date of filing: 24.07.2018
(51) Int. Cl.: F16L 21/00, F16L 37/04, H02G 3/04, H02G 3/06, F16L 25/14

(54) **A COUPLER FOR COUPLING TO A PIPE AND A METHOD OF FORMING THE COUPLER**
KOPPLER ZUM VERBINDEN MIT EINEM ROHR UND VERFAHREN ZUR HERSTELLUNG DES KOPPLERS
ORGANE D'ACCOUPLEMENT DESTINÉ À ÊTRE ACCOUPLÉ À UN TUYAU ET PROCÉDÉ DE FORMATION DE CET ORGANE D'ACCOUPLEMENT

(30) Priority: 25.07.2017 NL 2019342
(43) Date of publication of application: 03.06.2020
(73) Proprietor: Pipelife Nederland B.V., 1601 MA Enkhuizen (NL)
(72) Inventor: TOETENEL, Oscar, 3022 BM Rotterdam (NL); RESOORT, Mike, 2135 PX Hoofddorp (NL)
(74) Representative: Nederlandsch Octrooibureau
(86) International application number: PCT/NL2018/050514
(87) International publication number: WO 2019/022599

(56) References cited:
- US-A- 2 360 732
- US-A- 2 711 331
- US-A- 4 141 575
- US-A1- 2009 205 840

## Description

### Field of the invention

The invention relates to a coupler for coupling to a pipe and a method of forming the coupler.

### Background of the invention

Pipes or/and tubes are commonly used in various construction fields, including pipes for protecting electric cables in walls. To connect pipe sections with a certain tensile strength, there are various conventional techniques including gluing together the pipe sections, or using a coupler with an opening at each end and a movable metal gripper at the inside of the coupler for increasing the friction force between a pipe end and the coupler when a pipe end is inserted into the coupler.

US 2 711 331 A discloses a conduit coupling assembly for connecting fluid conduits, which is peripherally contractible into tight engagement with the conduit members upon slight axial extension thereof, the assembly comprising an elastically extensible sealing sleeve and a separate sleeve-like gripping device of interwoven strands.

US 4 141 575 A discloses a coupling sleeve for elongate members, which comprises a one-piece tubular member, slotted at end portions thereof to provide a series of ring elements. Upon attempted withdrawal of an elongate member from the tubular member, the ring elements are subjected to a rotating force which increases the locking engagement between the tubular member and elongate member.

### Summary of the invention

According to a first aspect, the invention provides a coupler for coupling to a pipe, the coupler comprising a body comprising a tubular shaped first portion with an opening for receiving the pipe, the first portion comprising a plurality of holes on a surface of the first portion such that the first portion can be flexed in an axial direction between a relaxed state and an elongated state, wherein the first portion has a first dimension in the relaxed state, and a second dimension in the elongated state, wherein the first and second dimensions are in a direction perpendicular to the axial direction and the second dimension is smaller than the first dimension; and a second portion connected to the first portion opposite the opening and comprising a sealing portion configured to seal an end of the pipe, wherein the body is formed in one part.

Such a coupler provides for a high tensile coupling of one or more pipes in an efficient manner. By being able to flex in an axial direction between a relaxed and elongated state, a pipe can easily be inserted into the opening and when the pipe is pulled, the coupler will flex to retain the pipe. The plurality of holes allows for the coupler to easily navigate between the relaxed and elongated state and allows for a simple manufacture of a coupler that is able to flex as desired. Furthermore, the plurality of holes allows for a better visual identification of the position of the pipes.

In an embodiment, the first portion is configured such that it can also be in a compressed state, and has a third dimension in the compressed state that is larger than the first dimension. Optionally, these dimensions can be inner diameters.

The pipe can be easily inserted into the coupler because during insertion, the pipe compresses the first portion into the compressed state due to friction, and thus increases the dimension of the first portion for insertion. Once inserted, the coupler returns to the relaxed state and the pipe is retained in the smaller dimensioned relaxed state. Also, such a coupler allows for a higher tolerance of outer dimensions of the pipe. That is, pipes with a larger range of outer dimensions can be fitted into the first portion due to the larger dimensioned compressed state the coupler is able to obtain for insertion.

In another embodiment, the first portion comprises a plurality of angled strands extending from the second portion toward the opening which define the holes and form an open mesh. Advantageously, the angled strands allow the first portion to be flexed in an axial direction between a relaxed state and an elongated state. The angled strands can be in the form of helically winding strands which overlap each other to form the plurality of holes. Such a configuration allows for a simple manufacture with a coupler that can provide sufficient coupling strength while still allowing the flexing into different states.

In yet another embodiment, a width of the angled strands decreases along the length of the angled strands from the second portion to the opening. This provides a higher tensile strength for connecting the pipe because the part of the coupler close to the second portion experiences the most stress during a tensile pulling, and this part is reinforced by the increased width of the angled strands at that location.

In yet another embodiment, a helix angle of the angled strands increases in the direction of the opening. The part of the coupler close to the second portion experiences the most stress during a tensile pulling, and this part is provided extra reinforcement by the smaller helix angle strands at that location.

In yet another embodiment, the body further comprises a third portion connected to the second portion opposite to the first portion, with a second opening for receiving a second pipe, the third portion comprising a plurality of holes on a surface of the third portion such that the third portion can be flexed in an axial direction between a relaxed state and an elongated state, wherein the third portion has a first dimension in the relaxed state, and a second dimension in the elongated state, wherein the first and second dimensions are in a direction perpendicular to the axial direction and the second dimension is smaller than the first dimension, and the sealing portion of the second portion is configured to seal an end of the second pipe. This allows for multiple pipes to be easily and securely coupled by the coupler.

In yet another embodiment, the second portion comprises a plurality of holes on a surface of the second portion. This allows for accommodation of a larger range of outer dimensions of pipes while maintaining the ability to securely couple and seal to such pipes. The holes provide flexibility for the coupling to pipes with a slightly different (outer) dimension.

In yet another embodiment, at least a part of the sealing portion comprises a sealing part. The sealing part could be a sealing ring, sealing material, or any other type of sealing arrangement or part which helps to seal the pipe to the coupler and provide a more water tight connection.

In yet another embodiment, at least a part of an inner surface of the first portion, an inner surface of the second portion, and an inner surface of the third portion is covered by a sealing part. Such a sealing part can be formed and/or applied in a number of different manners, such as spray application, injection moulding, etc. The sealing part can help to promote the sealing connection between the pipe and the coupler.

In yet another embodiment, the sealing portion of the second portion comprises a conical inner surface. This can help providing a better sealing connection between the pipe and the coupler.

In yet another embodiment, the sealing portion is at an outer surface of the second portion covering the plurality of holes. This allows an improved positioning of the sealing portion with respect to the second portion during fabrication of the coupler, hence the sealing quality is improved. Further, this embodiment can allow for easier manufacture, for example, with a second stage injection only on an outer surface.

In yet another embodiment, the body can include surface features which can help to accommodate compression of the coupler for insertion or removal of a pipe. The surface features could be projections, indentations, finger accomodations and/or other features which help one to grip the coupler in one or more places for compression.

In yet another embodiment, at least a part of the body is made by injection molded plastic. This allows for easy and efficient production despite the challenges of forming a coupler with a plurality of openings.

In yet another embodiment, the first portion comprises an inner surface with an increasing dimension toward the opening, or/and wherein the third portion comprises an inner surface with an increasing dimension toward the second opening. Optionally the first or/and the third portion could have a conical inner surface at the opening. Further optionally, the area adjacent to openings can have an even more increased flexibility. Any of these options can allow for the pipe to be more easily inserted into and accommodated by the coupler.

According to another aspect, the invention provides a method for coupling a coupler to a pipe, the method comprising inserting an end of the pipe into a body comprising a tubular shaped first portion with an opening for receiving the pipe, the first portion comprising a plurality of holes on a surface of the first portion such that the first portion can be flexed in an axial direction between a relaxed state and an elongated state, wherein the first portion has a first dimension in the relaxed state, and a second dimension in the elongated state, wherein the first and second dimensions are in a direction perpendicular to the axial direction and the second dimension is smaller than the first dimension; and a second portion connected to the first portion opposite the opening and comprising a sealing portion configured to seal an end of the pipe; wherein the body is formed in one part.

According to another aspect, the invention provides a method for forming such a coupler by injection molding. Injection molding can be an easy and efficient way to form a coupler, and can be done in one stage or a number of stages if different materials are used, for example, with a sealing part.

Further embodiments are disclosed in the attached claims.

### Brief description of the Figures

Embodiments of the present invention will be described hereinafter, by way of example only, with reference to the accompanying drawings which are schematic in nature and therefore not necessarily drawn to scale. Furthermore, like reference signs in the drawings relate to like elements.
Figure 1a schematically shows a coupler according to an embodiment of the present disclosure.
Figure 1b shows a cross section of the coupler of Fig. 1a.
Figure 1c shows a cross section of the coupler of Fig. 1a in a compressed state.
Figure 1d shows a cross section of the coupler of Fig. 1a in a compressed state.
Figure 1e shows a cross section of the coupler of Fig. 1a in an elongated state.
Figure 2a schematically shows a coupler according to an embodiment of the present disclosure.
Figure 2b schematically shows a cross section of the coupler of Fig. 2a.
Figure 3 schematically shows a coupler according to an embodiment of the present disclosure.
Figure 4 schematically shows a cross section of a coupler according to an embodiment of the present disclosure.
Figure 5a schematically shows a coupler prior to mounting a sealing portion according to an embodiment of the present disclosure.
Figure 5b schematically shows the coupler of Fig. 5a with a sealing portion according to an embodiment of the present disclosure.
Figure 5c schematically shows a transverse cross section of the coupler of Fig. 5b.
Figure 5d schematically shows a side view of the coupler of Fig. 5b from the D direction of Fig. 5c.
Figure 5e schematically shows a longitudinal cross section of the coupler of Fig. 5b in the DD plane of Fig. 5c.
Figure 5f schematically shows a side view of the coupler of Fig. 5b from the C direction of Fig. 5c.
Figure 5g schematically shows a longitudinal cross section of the coupler of Fig. 5b in the CC plane of Fig. 5c.

### Detailed description

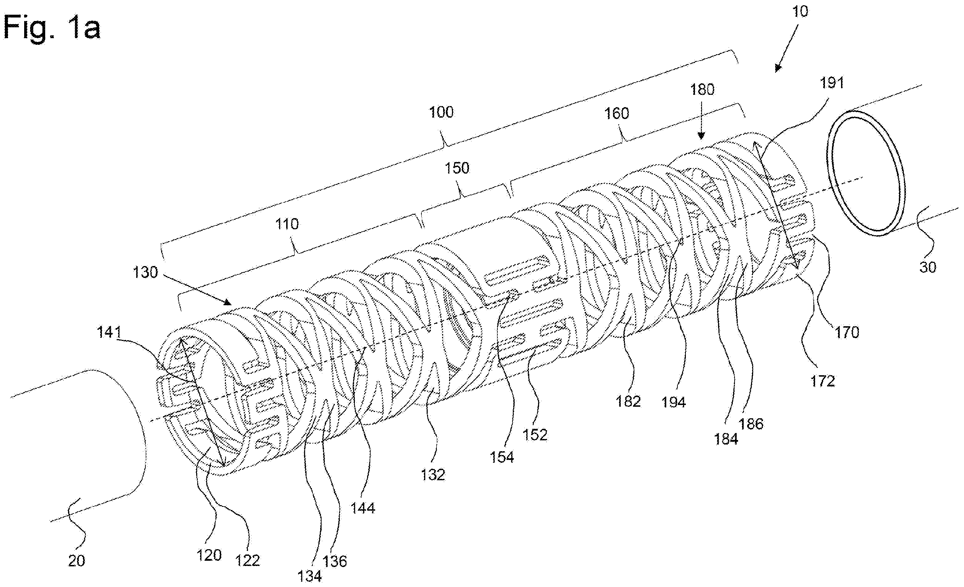

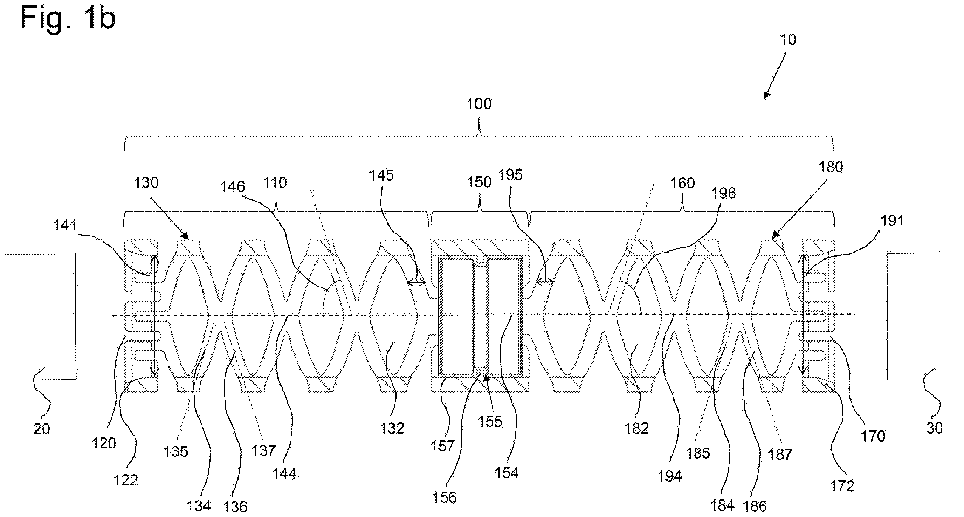

Figure 1a schematically shows a coupler 10, and Fig. 1b shows a cross-sectional view of the coupler 10.

The coupler 10 includes a body 100 comprising a tubular shaped first portion 110, a second portion 150, and a third portion 160. The first portion 110 has an opening 120 for receiving a pipe 20, and a plurality of angled strands 130 which define a plurality of holes 132. First strands 134 are angled in a first, clockwise direction 135 and second strands 136 are angled in a second, counter-clockwise direction 137. The plurality of angled strands 130 are wider and more angled near the second portion 150 and become less angled and narrower as they approach the opening 120. The angle of the strands 130 can be, for example, in a range of 5 - 20 °, but can vary outside of the range in certain embodiments. The opening 120 is surrounded by a receiving portion 122 with an increasing dimension (e.g. diameter) toward the opening 120. In this way, the pipe 20 can be more easily inserted into the first portion 110 due to the sloped inner surface. Receiving portion 122 also can have a more flexible configuration for accommodating a wide range of variances of pipe outer dimension. The first portion 110 has an axis 144 which extends through the length of the first portion 110, and a first dimension 141. The first dimension is in this case a first inner diameter. The axis 144 runs longitudinally through the center of cylindrical first portion 110.

The first portion 110 comprises an inner surface with a constant dimension for at least a part of the first portion 110 along the axis 144.

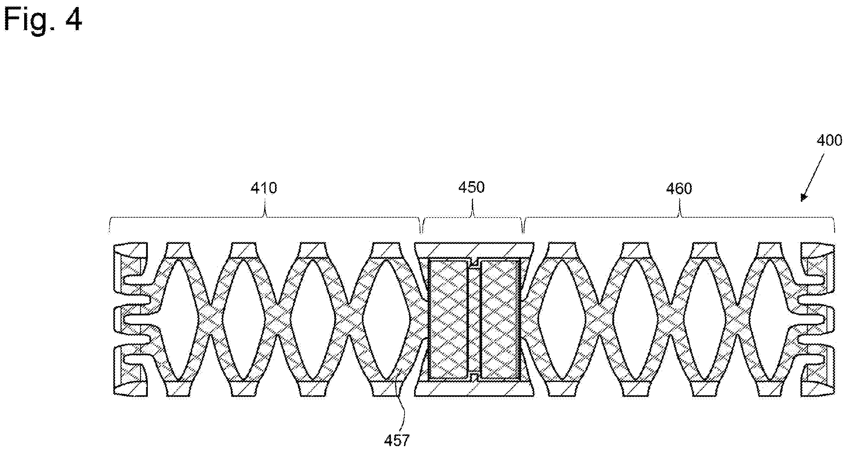

The second portion 150 is connected to the first portion 110 opposite the opening 120 and includes holes (or slits) 152, and a sealing portion 155. The sealing portion 155 includes an inner wall 156 and a conical sealing surface 157 which lines the inner side of second portion 150. In an embodiment (see Fig. 4), the sealing surface 157 even extends over the holes 152, though in other embodiments it may not. The sealing surface 157 can be formed of thermoplastic elastomer or/and rubber to help be water and/or concrete tight, and can be flexible to enable proper sealing. The second portion 150 has a tubular shape and an axis 154 which extends through the length of the second portion 150 and aligns with first portion such that axis 144 extends through the center of second portion 150 as well.

The third portion 160 is similar to the first portion 110, with an opening 170 for receiving a pipe 30 and a plurality of angled strands 180 which define a plurality of holes 182. First strands 184 are angled in a first, clockwise direction 185 and second strands 186 are angled in a second, counter-clockwise direction 187. The plurality of angled strands 180 are wider and more angled near the second portion 150 and become less angled and narrower as they approach the opening 170. The angles of the strands 180 can be, for example, in a range of 5 - 20 °, but can vary outside of the range in certain embodiments. The opening 170 is surrounded by a receiving portion 172 with an increasing dimension (e.g. diameter) toward the opening 170. In this way, the pipe 30 can be more easily inserted into the third portion 160 due to the sloped inner surface. Receiving portion 172 also can have a more flexible configuration for accommodating a wide range of variances of pipe outer dimension. The third portion 160 has an axis 194 and a first dimension 191. The first dimension is in this case a first diameter or a first inner diameter. The axis 194 is a cylindrical axis.

The third portion 160 comprises an inner surface with a constant dimension for at least a part of the third portion 160 along the axis 194.

The body 100 is formed in one part, for example, by injection moulding. In some instances, this can be a multiple step injection mould process, with a first step for the main components and a second step for some of the inner or outer sealing components of the second portion 150. At least a part of the body 100 can be made by injection moulded plastic. Advantageously, the coupler can be more efficiently produced. The plastic can comprise at least one of: polyethylene (PE), polyamide (PA), polypropylene (PP), polyvinyl chloride (PVC), polymer, though can be other materials depending on the application.

As shown in Figs. 1a-1d, the one or more pipes 20, 30 are cylindrical pipes for connecting to coupler 10 though such a coupler could be used with pipes with a square cross section or a polygon cross section and the coupler shaper would be adjusted accordingly. The first portion 110, second portion 150, third portion 160 have an inner dimension corresponding to the cross section of the pipes, though slightly smaller for proper coupling and sealing. Specifically, the inner dimension in a relaxed state is smaller than the outer dimension of the pipes to be coupled, for example up to 3-5% smaller. For example, the inner dimension in the relaxed state can be in a range of 18.7 mm to 18.9 mm, allowing for an outer dimension of the pipes to be around 19.1 mm. In some embodiments, the inner dimension of the second portion 150 is not smaller than the outer dimension of the pipes to be coupled.

The angled strands 130, 180 can take many forms, including spiral strands, helix strands or screw shaped strands so long as they allow movement between a relaxed state and an elongated state. The spiral strands can be continuous, or in some embodiments not continuous. When not continuous, first and third portions can be arranged such that a crossing between the first strands 134 (respectively 184) and the second strands 136 (respectively 186) has a decreased dimension making a strand portion between the crossings relatively longer and more flexible. In this way the first portion 110 (and third portion 160) can easier flex.

The first dimension 141, 191, as shown in Fig. 1a, the inner diameter of first portion 110 is in a range of 15mm and 30mm, though can be other dimensions depending on the pipes to be coupled. Thus a pipe 20, 30 with an outer dimension in the range of 15mm and 30mm (though slightly larger than the first dimension 141, 191) can be fitted to the coupler 10. The second portion 150 can also have an inner dimension in the range of 15mm and 30mm, while also slightly less than the outer diameter of the pipe to be coupled.

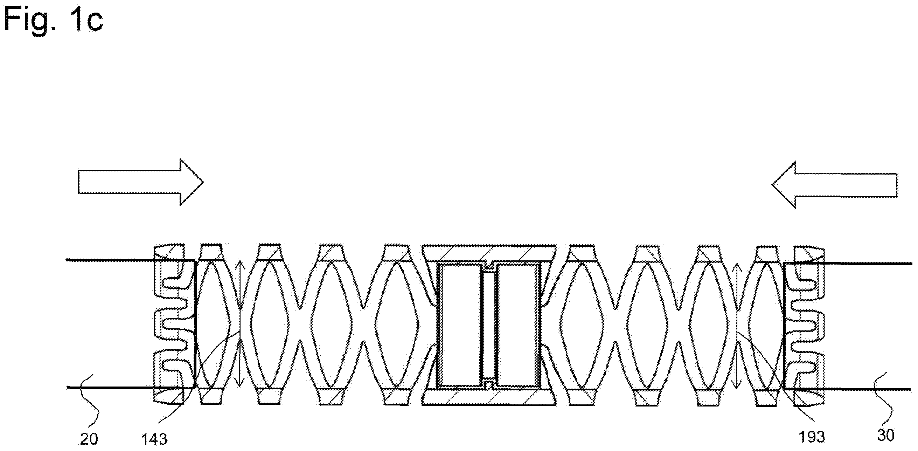

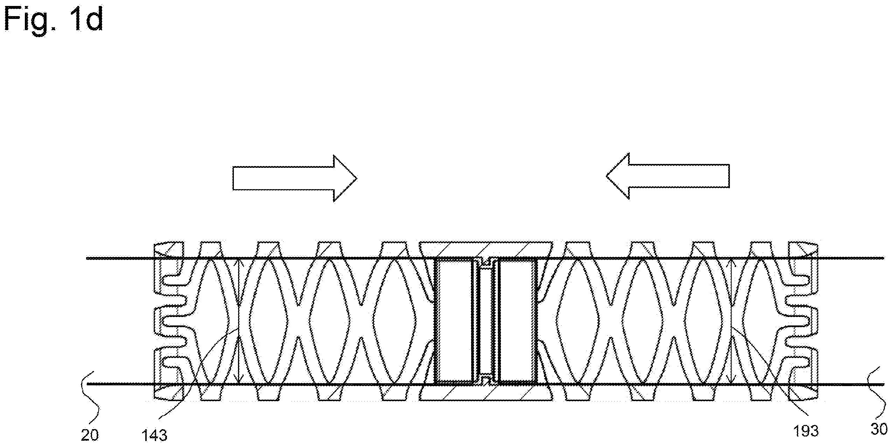

In use, a pipe 20 can be inserted into each of the first portion 110 and the third portion 160 at the openings 120, 170. The receiving portions 122, 172 ensure a high level of flexibility around the openings 120, 170 to allow for slight differences in pipe size to be accommodated by the coupler 10 and for easier insertion of pipes. The pipe 20 is pushed into the coupler 10 in an axial direction toward the second portion 150. The friction between the pipe 20 and the first portion 110, in particularly the strands 130, changes the coupler 10 from the relaxed state shown in Fig. 1a and 1b to a compressed state (see Fig. 1c). In the compressed state, the diameter of the first portion 110 is larger (i.e. a third dimension 143, 193), allowing for easier insertion of the pipe 20. In the relaxed state, the first dimension 141 (e.g. diameter) of the first portion 110 is smaller than the outer dimension (e.g. diameter) of the pipe 20. The pipe 20 is pushed axially until it encounters the sealing portion 155 of the second portion 150, and particularly when an end of the pipe 20 is pressed against the inner wall 156 (see Fig. 1d). The pipe 20 is then sealed to the coupler 10 through the second portion 150. Another pipe 30 is inserted in a similar manner into the third portion 160, and the coupler 10 provides a sealing connection between the pipes 20, 30.

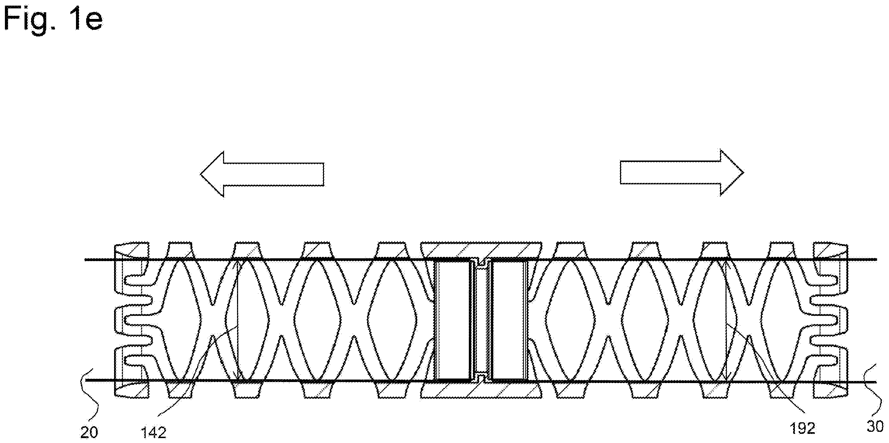

When a tensile force is applied to either of pipes 20, 30, the coupler 10 is pulled into an elongated state (see Fig. 1e) due to the friction between the pipe 20 and the first portion 110 and/or third portion 160, in particularly the strands 130/180, extending the length of the coupler 10 and reducing the diameter of one or both of the first portion 110 and the third portion 160 (i.e. a second dimension 142, 192). This reduction in diameter can be about 3%, though in some embodiments would never go smaller than the pipe diameter. This reduction in diameter provides a strong gripping force to ensure that the pipes 20, 30 remain coupled to the coupler 10 and each other despite the tensile forces acting on them. Additionally, the materials of coupler 10 and pipe 20 could be chosen to reduce or add frictional gripping force depending on the coupling strength required.

By using coupler 10, pipes can be securely coupled to resist uncoupling without the need for additional gripping rings or glue. After coupling, pipes are often buried and/or covered with cement. As discussed in the background, this has a tendency to dislodge pipes from couplings due to the force of the cement. Additionally, the gluing can be cumbersome, and the pipe sections cannot be released thereafter. The conventional coupler with a metal gripper provides limited tensile strength due to the limited friction of the metal gripper. So the pipe sections with prior art couplers cannot withstand high pulling force without being separated. Also, the prior art couplers do not provide a watertight connection between the pipe sections.

The coupler 10 is able to provide a strong coupling force to one or more pipes 20, 30 which can resist the dislodging forces from covering pipes and coupler 10 with cement without the need for gluing or additional metal gripper rings. The winding strands 130, 180 which define the holes 132, 182 provide for a strong coupling force which allows the coupler to easily and naturally go from a relaxed or compressed state to an elongated gripping state when forces for uncoupling are put on the pipes. The angled strands 130, 180 also allow for tailoring of the strength and flexibility to what is required in each region, changing the thickness, width 145, 195 and/or the helix angle 146, 196 from the portions toward second portion 150 towards the openings 120, 170. Because no glue or metal gripper rings are used, coupler 10 is also releasable, allowing for relatively easy extraction of pipes from coupler 10 by compressing coupler 10 and removing the pipe.

The width 145, 195 of strands is defined parallel to the axis 144, 194, and decreases along the length of the angled strands 130, 180 from the second portion 150 to the opening 120, 170 in the embodiment shown in Figs. 1a-1e. This provides a higher tensile strength for connecting the pipe 20, 30 where it is most needed as the part of the coupler 10 close to the second portion 150 experiences the most stress during a tensile pulling, and this part is reinforced by the increased width of the angled strands 130, 180 at that location.

The helix angle 146, 196 is be defined as an angle between a helix strand 130 and the axis 144, 194 of the first portion 110 and the third portion 160 respectively. The helix angle 146, 196 of the embodiment of Figs. 1a-1e increases in the direction of the opening 120, 170. The part of the coupler 10 close to the second portion 150 experiences the most stress during a tensile pulling, and this part is provided extra reinforcement by the smaller helix angle strands at that location.

Fig. 1a shows that the holes 152 have a longitudinal shape parallel to the axis 144. The holes 152 are shaped such that the second portion 150 can be flexed in a direction perpendicular to the axis 144. Depending on the embodiment, the second portion 150 can have different shapes, for example, a tubular shape or cylindrical shape, and can be flexed in a radial direction. The holes 152 allow for accommodation of a larger range of outer dimensions of pipes 20, 30 while maintaining the ability to securely couple and seal to such pipes 20, 30. The holes 152 provide flexibility for the coupling to pipes 20, 30 with a slightly different (outer) dimension. During the insertion of the pipes 20, 30 the second portion 150 enlarges in diameter to accommodate easier insertion.

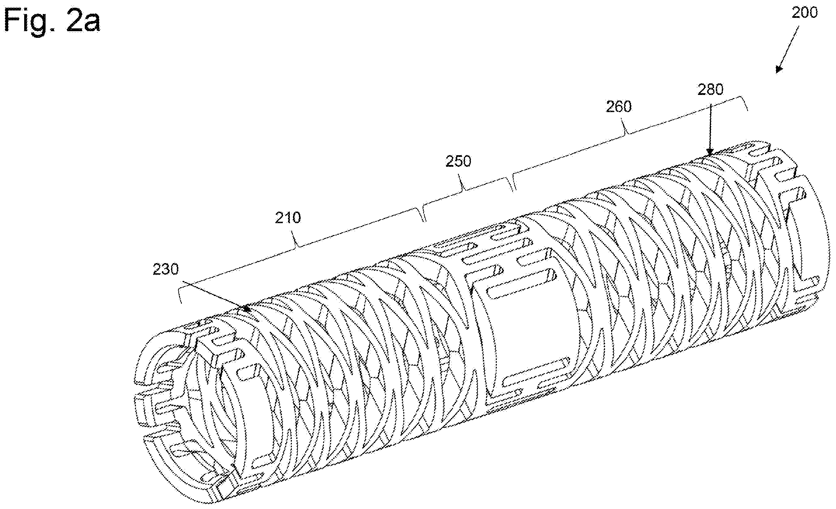

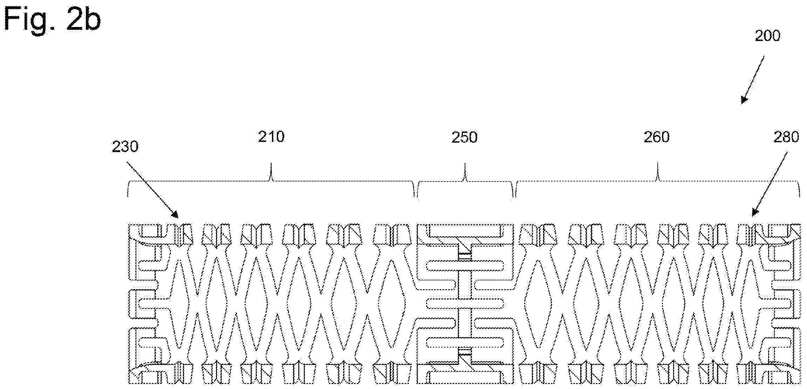

Fig. 2a shows a coupler 200 similar to the coupler 10 of Fig. 1a. The number of angled strands 230, 280 in first portion 210 and a third portion 260 or the number of turns is now 6 in this embodiment (instead of the 4 shown in the embodiment of Figs. 1a-1d). Fig. 2b shows a cross-sectional view of the coupler 200.

Using six angled strands 230 with six connection points instead of four can allow the coupler to have more strength while maintaining sufficient flexibility to be able to resist larger uncoupling loads on coupler 200. In particular, using six angled strands 230 decreases the chance the coupler 200 will bend/buckle while under pressure from the outside. However, the use of only four connection points, as in coupler 10, can help in the ease of manufacture, particularly when injection moulding.

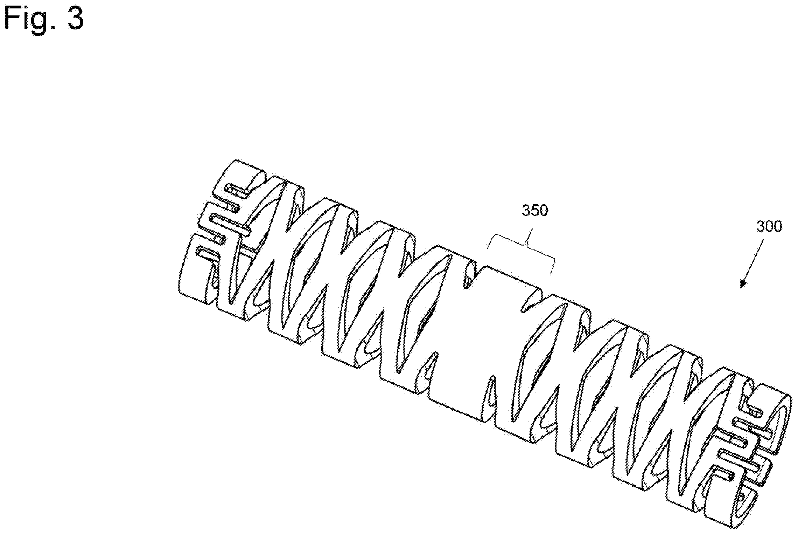

Fig 3 shows a coupler 300 similar to the coupler 200 of Fig. 2a. The second portion 350 of the embodiment of Fig. 3 has no holes. Such a configuration allows for a simple manufacture of the coupler 300. In another embodiment, the second portion 350 has no holes and is made from a flexible material to accommodate a larger range of outer dimensions of pipes 20, 30.

Fig. 4 shows a cross section view of a coupler 400 similar to the coupler 10 of Fig. 1a. Compared to Fig. 1b, also an inner surface of a first portion 410 and a third portion 460 is covered by a sealing surface 457. In the embodiment shown, the sealing surface 457 is continuous through the different portions, though in other embodiments it may not be. Such a sealing part can be formed and/or applied in a number of different manners, such as spray application, injection molding, etc. The sealing part can help to promote the sealing connection between the pipe and the coupler portions.

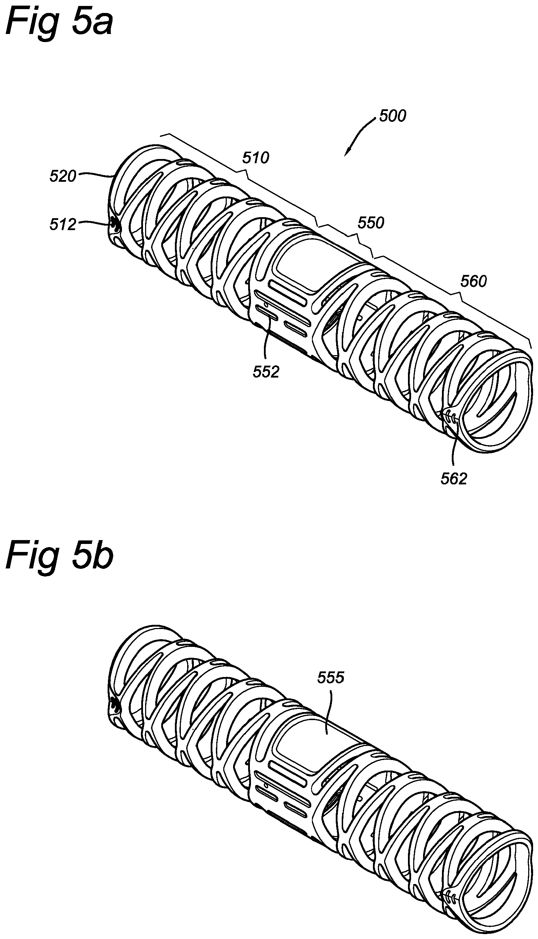

Fig. 5a-5g show another embodiment of a coupler. Fig. 5a shows a coupler prior to mounting a sealing portion 555. Similar to the body 100 of Fig. 1a, the body 500 of the coupler comprises a first portion 510, a second portion 550 that includes holes 552, and a third portion 560. The first portion 510 comprises a surface feature 512 at a location towards an opening 520 of the first portion 510. This surface feature 512 can have a number of different forms, for example, finger accomodations, projections, indentations and/or other surface features for an easier desired coupling or uncoupling of the pipe 20. The surface feature 512 is at a connection point of the strands closest to the opening 520, and can be located at each side of first portion 510. While two surface features 512 are shown, a different number could be used in different embodiments. A user can better grasp the first portion 510 through surface features 512 and push towards the second portion 550 so that a first dimension (diameter) of the first portion 510 increases. In this way, the pipe 20 can be more easily uncoupled from the coupler. Similar to the first portion 510, the third portion 560 also comprises one or more surface features 562.

Fig. 5b shows the coupler of Fig. 5a with the sealing portion 555. The sealing portion 555 is at an outer surface of the second portion 550 covering the holes 552. The sealing portion 555 can be a different material from the rest of coupler, for example, thermoplastic elastomer (TPE).

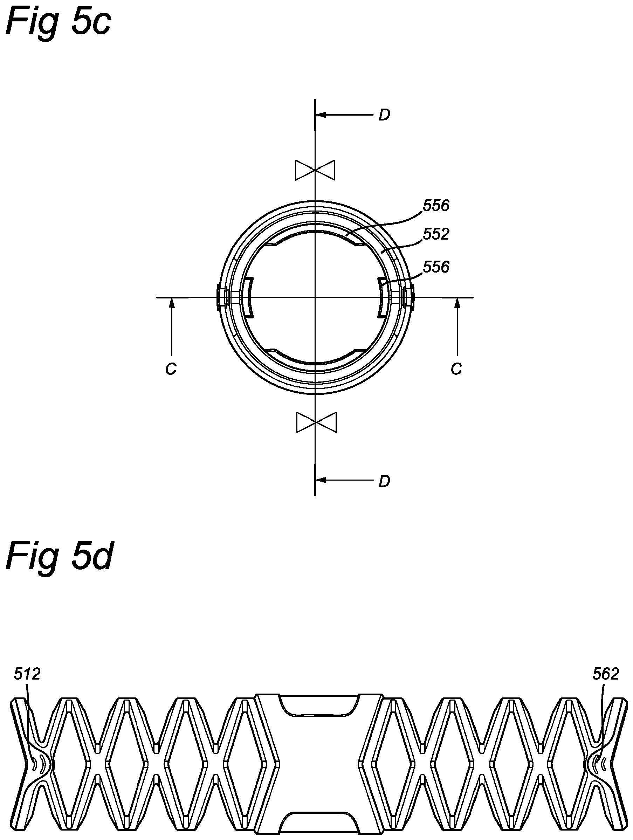

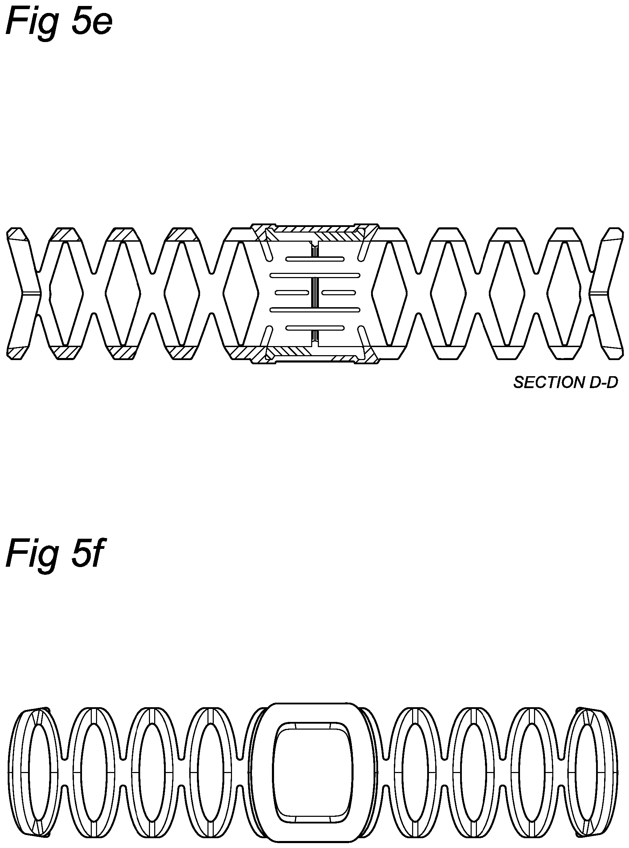

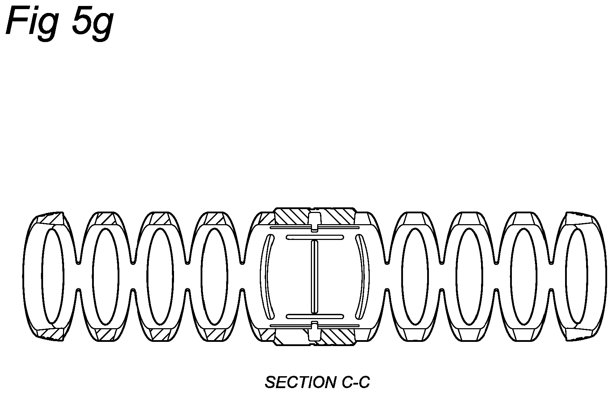

For forming the coupler of Fig. 5b, in a first step, the body 500 without the sealing portion 555 is formed in one part, for example, by injection moulding. In a second step the outer sealing portion 555 can be formed, for example, also by injection moulding. An advantage of the coupler in Fig. 5 is the improved producibility of the coupler. Because the sealing portion 555 is at an outer surface of the second portion 550, the positioning and ease of manufacture of the sealing portion 555 can be improved, and hence improve the overall sealing quality.

Figure 5c shows a transverse cross section of the coupler of Fig. 5b. Similar to the coupler of Fig. 1b, Fig. 5c shows an inner wall 556 on an inner surface of the second portion 550. In use, the pipe 20 is pressed against the inner wall 556, and inner wall 556 acts as a stop for pipe 20 within the coupler. From the perspective of the transverse cross section, the circular inner wall 556 is broken by the holes 552. While inner wall 556 is shown with four portions, with two longer and two shorter, this is for example purposes only, and can differ in number of breaks, position and configurations in different embodiments of the coupler.

Figure 5d shows a side view of the coupler of Fig. 5b from the D direction of Fig. 5c. Figure 5e shows a longitudinal cross section of the coupler of Fig. 5b in the DD plane of Fig. 5c. Figure 5f shows a side view of the coupler of Fig. 5b from the C direction of Fig. 5c. Figure 5g shows a longitudinal cross section of the coupler of Fig. 5b in the CC plane of Fig. 5c. Both Fig. 5e and 5g show that the sealing portion 555 has a non-uniform thickness along an axial direction such that the sealing portion 555 fills the holes 552 creating a flush inner surface of the second portion 550 though a varied outer surface. This allows a better sealing and a smoother insert of the pipe 20, and can allow for easier manufacture of the sealing portion and overall coupler.

While couplers have been shown with two openings for receiving pipes, other embodiments of the coupler can have one or more than two openings for coupling to different numbers of pipes. When the coupler has one opening, the second portion can be, for example, a stopper to seal the pipe. Additionally, the strands can differ from those shown in the Figures, for example, differences in number of strands and/or angles or width of strands between the first portion 130 and the third portion 180, such that a different length or/and a different tensile strength can be created.

In the foregoing description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

## Claims

1. A coupler (10) for coupling to a pipe (20), the coupler comprising
a body (100) comprising:
a tubular shaped first portion (110) with an opening (120) for receiving the pipe, the first portion comprising a plurality of holes (132) on a surface of the first portion such that the first portion can be flexed in an axial direction between a relaxed state and an elongated state, wherein the first portion has a first dimension (141) in the relaxed state, and a second dimension (142) in the elongated state, wherein the first and second dimensions are in a direction perpendicular to the axial direction and the second dimension is smaller than the first dimension; and
a second portion (150) connected to the first portion opposite the opening and comprising a sealing portion (155) configured to seal an end of the pipe;
wherein the body is formed in one part.

2. The coupler according to claim 1, wherein the first portion is configured such that it can also be in a compressed state, and has a third dimension (143) in the compressed state that is larger than the first dimension.

3. The coupler according to at least one of claims 1 - 2, wherein the first portion comprises a plurality of angled strands (130) extending from the second portion toward the opening which define the holes and form an open mesh.

4. The coupler according to claim 3, wherein the plurality of angled strands comprise
a first group (134) winding in a first direction (135) from the second portion toward the opening, and
a second group (136) winding in a second direction (137) opposite the first direction from the second portion toward the opening, wherein the first group and second group strands intersect, preferably wherein each of the first and second groups comprises one to six angled strands.

5. The coupler according to any of claims 3 - 4, wherein a width (145) of the angled strands decreases along the length of the angled strands from the second portion to the opening, and/or wherein a helix angle (146) of the angled strands increases in the direction of the opening.

6. The coupler according to any of claims 1 - 5, wherein the body further comprises a third portion (160) connected to the second portion opposite to the first portion, with a second opening (170) for receiving a second pipe (30), the third portion comprising a plurality of holes (182) on a surface of the third portion such that the third portion can be flexed in an axial direction between a relaxed state and an elongated state, wherein the third portion has a first dimension (191) in the relaxed state, and a second dimension (192) in the elongated state, wherein the first and second dimensions are in a direction perpendicular to the axial direction and the second dimension is smaller than the first dimension, and
the sealing portion of the second portion is configured to seal an end of the second pipe.

7. The coupler according to any of claims 1 - 6, wherein the second portion comprises a plurality of holes (152, 552) on a surface of the second portion.

8. The coupler according to any of claims 1 - 7, wherein at least a part of the sealing portion comprises a sealing part (157) comprising a sealing ring and/or sealing material applied to the inner surface.

9. The coupler according to any of claims 6-8, wherein at least a part of an inner surface of the first portion, an inner surface of the second portion, and an inner surface of the third portion is covered by a sealing part (457).

10. The coupler according to claim 9, wherein the sealing part comprises a conical inner surface.

11. The coupler according to claim 7, wherein the sealing portion (555) is at an outer surface of the second portion (550) covering the plurality of holes (552), preferably wherein the sealing portion (555) comprises thermoplastic elastomer, TPE.

12. The coupler according to any of claims 6-11, wherein the first portion comprises an inner surface with an increasing dimension toward the opening, or/and wherein the third portion comprises an inner surface with an increasing dimension toward the second opening.

13. The coupler according to any of claims 1 - 12, wherein the first portion or/and the third portion comprise(s) a surface feature for elongating or compressing of the first portion or/and the third portion respectively.

14. A method for coupling a coupler to a pipe, comprising:
inserting an end of the pipe into a body comprising:
a tubular shaped first portion (130) with an opening (110) for receiving the pipe, the first portion comprising a plurality of holes (140) on a surface of the first portion such that the first portion can be flexed in an axial direction between a relaxed state and an elongated state, wherein the first portion has a first dimension in the relaxed state, and a second dimension in the elongated state, wherein the first and second dimensions are in a direction perpendicular to the axial direction and the second dimension is smaller than the first dimension; and
a second portion (170) connected to the first portion opposite the opening and comprising a sealing portion configured to seal an end of the pipe;
wherein the body is formed in one part.

15. A method for forming a coupler, the method comprising:
injection molding a coupler according to any of claims 1-13, preferably wherein at least part of the coupler body is formed in a first stage injection molding step, and at least a part of the second portion is formed in a second stage injection molding step.

16. The method of claim 15, and further comprising adding sealing material to at least a portion of an inner surface and/or outer surface of the first portion and/or second portion.

## Patentansprüche

1. Verbindungsstück (10) zur Verbindung mit einem Rohr (20), wobei das Verbindungsstück aus einem Aufbau (100) besteht, der umfasst:
ein röhrenförmiges erstes Teilstück (110) mit einer Öffnung (120) zur Aufnahme des Rohrs, wobei das erste Teilstück eine Vielzahl von Löchern (132) auf einer Oberfläche des ersten Teilstücks aufweist, sodass das erste Teilstück in einer axialen Richtung zwischen einem entspannten Zustand und einem gestreckten Zustand gebogen werden kann, wobei das erste Teilstück eine erste Ausdehnung (141) im entspannten Zustand und eine zweite Ausdehnung (142) im gestreckten Zustand aufweist, wobei die erste und die zweite Ausdehnung in einer Richtung senkrecht zur axialen Richtung bestehen und die zweite Ausdehnung kleiner als die erste Ausdehnung ist; und
ein zweites Teilstück (150), das mit dem ersten Teilstück gegenüber der Öffnung verbunden ist und einen abdichtenden Abschnitt (155) umfasst, der ausgestaltet ist, ein Ende des Rohrs abzudichten;
wobei der Aufbau in einem Stück gebildet ist.

2. Verbindungsstück nach Anspruch 1, wobei das erste Teilstück so gestaltet ist, dass es sich auch in einem zusammengedrückten Zustand befinden kann und im zusammengedrückten Zustand eine dritte Ausdehnung (143) aufweist, die größer als die erste Ausdehnung ist.

3. Verbindungsstück nach mindestens einem der Ansprüche 1 bis 2, wobei das erste Teilstück eine Vielzahl winkelförmiger Stränge (130) aufweist, die sich von dem zweiten Teilstück zur Öffnung hin erstrecken, welche die Löcher umgrenzen und ein offenes Gewebe bilden.

4. Verbindungsstück nach Anspruch 3, wobei die Vielzahl winkelförmiger Stränge eine erste Gruppe (134) umfasst, die sich in einer ersten Richtung (135) von dem zweiten Teilstück zur Öffnung hin windet, und eine zweite Gruppe (136), die sich in einer zweiten Richtung (137), der ersten Richtung entgegengesetzt, von dem zweiten Teilstück zur Öffnung hin windet, wobei sich die erste Gruppe und die zweite Gruppe von Strängen schneiden, wobei vorzugsweise jede der ersten und zweiten Gruppe aus einem bis sechs winkelförmigen Strängen besteht.

5. Verbindungsstück nach einem der Ansprüche 3 bis 4, wobei eine Breite (145) der winkelförmigen Stränge entlang der Länge der winkelförmigen Stränge von dem zweiten Teilstück zur Öffnung abnimmt, und/oder wobei ein Schrägungswinkel (146) der winkelförmigen Stränge in Richtung der Öffnung zunimmt.

6. Verbindungsstück nach einem der Ansprüche 1 bis 5, wobei der Aufbau des Weiteren ein drittes Teilstück (160) umfasst, das mit dem zweiten Teilstück gegenüber dem ersten Teilstück verbunden ist, mit einer zweiten Öffnung (170) zur Aufnahme eines zweiten Rohrs (30), das dritte Teilstück eine Vielzahl von Löchern (182) auf einer Oberfläche des dritten Teilstücks umfasst, sodass das dritte Teilstück in einer axialen Richtung zwischen einem entspannten und einem gestreckten Zustand gebogen werden kann, wobei das dritte Teilstück eine erste Ausdehnung (191) im entspannten Zustand und eine zweite Ausdehnung (192) im gestreckten Zustand aufweist, wobei die erste und die zweite Ausdehnung in einer Richtung senkrecht zur axialen Richtung sich befinden, und die zweite Ausdehnung kleiner als die erste Ausdehnung ist, und
der abdichtende Abschnitt des zweiten Teilstücks gestaltet ist, ein Ende des zweiten Rohrs abzudichten.

7. Verbindungsstück nach einem der Ansprüche 1 bis 6, wobei das zweite Teilstück eine Vielzahl von Löchern (152, 552) auf einer Oberfläche des zweiten Teilstücks aufweist.

8. Verbindungsstück nach einem der Ansprüche 1 bis 7, wobei zumindest ein Teil des abdichtenden Abschnitts einen Dichtungsteil (157) umfasst, der einen Dichtungsring und/oder auf die Innenfläche aufgebrachtes Dichtungsmaterial aufweist.

9. Verbindungsstück nach einem der Ansprüche 6 bis 8, wobei zumindest ein Teil einer Innenfläche des ersten Teilstücks, einer Innenfläche des zweiten Teilstücks und einer Innenfläche des dritten Teilstücks durch einen Dichtungsteil (457) bedeckt ist.

10. Verbindungsstück nach Anspruch 9, wobei der Dichtungsteil eine konische Innenfläche aufweist.

11. Verbindungsstück nach Anspruch 7, wobei der abdichtende Abschnitt (555) sich an einer Außenfläche des zweiten Teilstücks (550) befindet, die Vielzahl von Löchern (552) bedeckt, wobei der abdichtende Abschnitt (555) vorzugsweise aus thermoplastischem Elastomer, TPE, besteht.

12. Verbindungsstück nach einem der Ansprüche 6 bis 11, wobei das erste Teilstück eine Innenfläche mit einer zunehmenden Ausdehnung zur Öffnung hin aufweist, oder/und wobei das dritte Teilstück eine Innenfläche mit einer zunehmenden Ausdehnung zur zweiten Öffnung hin aufweist.

13. Verbindungsstück nach einem der Ansprüche 1 bis 12, wobei das erste Teilstück oder/und das dritte Teilstück ein Oberflächenmerkmal zum Strecken oder Zusammendrücken des ersten Teilstücks bzw. des dritten Teilstücks aufweist (aufweisen).

14. Verfahren zur Befestigung eines Verbindungsstücks mit einem Rohr, umfassend:
Einsetzen eines Endes des Rohrs in einen Aufbau, der umfasst:
ein röhrenförmiges erstes Teilstück (130) mit einer Öffnung (110) zur Aufnahme des Rohrs, wobei das erste Teilstück eine Vielzahl von Löchern (140) auf einer Oberfläche des ersten Teilstücks aufweist, sodass das erste Teilstück in einer axialen Richtung zwischen einem entspannten Zustand und einem gestreckten Zustand gebogen werden kann, wobei das erste Teilstück eine erste Ausdehnung im entspannten Zustand und eine zweite Ausdehnung im gestreckten Zustand aufweist, wobei die erste und die zweite Ausdehnung in einer Richtung senkrecht zur axialen Richtung bestehen und die zweite Ausdehnung kleiner als die erste Ausdehnung ist; und
ein zweites Teilstück (170), das mit dem ersten Teilstück gegenüber der Öffnung verbunden ist und einen abdichtenden Abschnitt umfasst, der ausgestaltet ist, ein Ende des Rohrs abzudichten;
wobei der Aufbau in einem Stück gebildet ist.

15. Verfahren zur Bildung eines Verbindungsstücks, wobei das Verfahren umfasst:
Spritzgießen eines Verbindungsstücks nach einem der Ansprüche 1 bis 13, wobei zumindest ein Teil des Verbindungsstückaufbaus vorzugsweise in einer ersten Stufe eines Spritzgießschrittes gebildet wird und zumindest ein Teil des zweiten Teilstücks in einer zweiten Stufe eines Spritzgießschrittes gebildet wird.

16. Verfahren nach Anspruch 15 und des Weiteren umfassend das Hinzufügen von Dichtungsmaterial auf mindestens einen Abschnitt einer Innenfläche und/oder Außenfläche des ersten Teilstücks und/oder zweiten Teilstücks.

## Revendications

1. Organe d'accouplement (10) destiné à être accouplé à un tuyau (20), l'organe d'accouplement comprenant
un corps (100) comprenant :
une première partie de forme tubulaire (110) avec une ouverture (120) pour recevoir le tuyau, la première partie comprenant une pluralité de trous (132) sur une surface de la première partie de telle sorte que la première partie peut être fléchie dans une direction axiale entre un état relâché et un état allongé, la première partie ayant une première dimension (141) dans l'état relâché et une deuxième dimension (142) dans l'état allongé, les première et deuxième dimensions étant dans une direction perpendiculaire à la direction axiale et la deuxième dimension étant inférieure à la première dimension ; et
une deuxième partie (150) reliée à la première partie à l'opposé de l'ouverture et comprenant une partie d'étanchéité (155) configurée pour assurer l'étanchéité d'une extrémité du tuyau ;
le corps étant formé d'une seule pièce.

2. Organe d'accouplement selon la revendication 1, dans lequel la première partie est configurée de telle sorte qu'elle peut également être dans un état comprimé, et a une troisième dimension (143) dans l'état comprimé qui est supérieure à la première dimension.

3. Organe d'accouplement selon au moins l'une des revendications 1 - 2, dans lequel la première partie comprend une pluralité de brins inclinés (130) s'étendant à partir de la deuxième partie vers l'ouverture, lesquels définissent les trous et forment un maillage ouvert.

4. Organe d'accouplement selon la revendication 3, dans lequel la pluralité de brins inclinés comprennent
un premier groupe (134) s'enroulant dans une première direction (135) à partir de la deuxième partie vers l'ouverture, et
un second groupe (136) s'enroulant dans une seconde direction (137) opposée à la première direction à partir de la deuxième partie vers l'ouverture, les brins du premier groupe et du second groupe s'intersectant et, de préférence, chacun des premier et second groupes comprenant de un à six brins inclinés.

5. Organe d'accouplement selon l'une quelconque des revendications 3 - 4, dans lequel une largeur (145) des brins inclinés diminue le long de la longueur des brins inclinés de la deuxième partie à l'ouverture, et/ou dans lequel un angle d'hélice (146) des brins inclinés augmente dans la direction de l'ouverture.

6. Organe d'accouplement selon l'une quelconque des revendications 1 - 5, dans lequel le corps comprend en outre une troisième partie (160) reliée à la deuxième partie à l'opposé de la première partie, avec une seconde ouverture (170) pour recevoir un second tuyau (30), la troisième partie comprenant une pluralité de trous (182) sur une surface de la troisième partie de telle sorte que la troisième partie peut être fléchie dans une direction axiale entre un état relâché et un état allongé, la troisième partie ayant une première dimension (191) dans l'état relâché et une deuxième dimension (192) dans l'état allongé, les première et deuxième dimensions étant dans une direction perpendiculaire à la direction axiale et la deuxième dimension étant inférieure à la première dimension, et
la partie d'étanchéité de la deuxième partie est configurée pour assurer l'étanchéité d'une extrémité du second tuyau.

7. Organe d'accouplement selon l'une quelconque des revendications 1 - 6, dans lequel la deuxième partie comprend une pluralité de trous (152, 552) sur une surface de la deuxième partie.

8. Organe d'accouplement selon l'une quelconque des revendications 1 - 7, dans lequel au moins une partie de la partie d'étanchéité comprend un élément d'étanchéité (157) comprenant une bague d'étanchéité et/ou un matériau d'étanchéité appliqué à la surface interne.

9. Organe d'accouplement selon l'une quelconque des revendications 6 - 8, dans lequel au moins une partie d'une surface interne de la première partie, d'une surface interne de la deuxième partie, et d'une surface interne de la troisième partie est recouverte par un élément d'étanchéité (457).

10. Organe d'accouplement selon la revendication 9, dans lequel l'élément d'étanchéité comprend une surface interne conique.

11. Organe d'accouplement selon la revendication 7, dans lequel la partie d'étanchéité (555) est à une surface externe de la deuxième partie (550) recouvrant la pluralité de trous (552), de préférence la partie d'étanchéité (555) comprenant un élastomère thermoplastique, TPE.

12. Organe d'accouplement selon l'une quelconque des revendications 6 - 11, dans lequel la première partie comprend une surface interne avec une dimension croissante vers l'ouverture, et/ou dans lequel la troisième partie comprend une surface interne avec une dimension croissante vers la seconde ouverture.

13. Organe d'accouplement selon l'une quelconque des revendications 1 - 12, dans lequel la première partie et/ou la troisième partie comprend une caractéristique de surface pour un allongement ou une compression de la première partie et/ou de la troisième partie, respectivement.

14. Procédé pour accoupler un organe d'accouplement à un tuyau, comprenant :
Introduire une extrémité du tuyau dans un corps comprenant :
une première partie de forme tubulaire (130) avec une ouverture (110) pour recevoir le tuyau, la première partie comprenant une pluralité de trous (140) sur une surface de la première partie de telle sorte que la première partie peut être fléchie dans une direction axiale entre un état relâché et un état allongé, la première partie ayant une première dimension dans l'état relâché et une deuxième dimension dans l'état allongé, les première et deuxième dimensions étant dans une direction perpendiculaire à la direction axiale et la deuxième dimension étant inférieure à la première dimension ; et
une deuxième partie (170) reliée à la première partie à l'opposé de l'ouverture et comprenant une partie d'étanchéité configurée pour assurer l'étanchéité d'une extrémité du tuyau ;
le corps étant formé d'une seule pièce.

15. Procédé pour former un organe d'accouplement, le procédé comprenant :
mouler par injection un organe d'accouplement selon l'une quelconque des revendications 1 - 13, de préférence au moins une partie du corps d'organe d'accouplement étant formée dans une étape de moulage par injection de première phase, et au moins une partie de la deuxième partie étant formée dans une étape de moulage par injection de deuxième phase.

16. Procédé selon la revendication 15, et comprenant en outre ajouter un matériau d'étanchéité à au moins une partie d'une surface interne et/ou d'une surface externe de la première partie et/ou de la deuxième partie.
